(19) Europäisches Patentamt
European Patent Office
Office européen des brevets

(11) **EP 3 916 117 A1**

(12) **EUROPEAN PATENT APPLICATION**
published in accordance with Art. 153(4) EPC

(43) Date of publication:
**01.12.2021 Bulletin 2021/48**

(51) Int Cl.:
**C22C 14/00** (2006.01)  **C23C 22/12** (2006.01)
**C23C 22/34** (2006.01)

(21) Application number: **20744245.0**

(22) Date of filing: **23.01.2020**

(86) International application number:
**PCT/JP2020/002226**

(87) International publication number:
**WO 2020/153415 (30.07.2020 Gazette 2020/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.01.2019 JP 2019009748**

(71) Applicant: **NIPPON STEEL CORPORATION**
**Chiyoda-ku**
**Tokyo 100-8071 (JP)**

(72) Inventors:
• **TAKAHASHI Kazuhiro**
  **Tokyo 100-8071 (JP)**
• **AKIOKA Koji**
  **Tokyo 100-8071 (JP)**
• **IKEDA Eiji**
  **Tokyo 100-8071 (JP)**
• **KAMINAKA Hideya**
  **Tokyo 100-0006 (JP)**

(74) Representative: **Vossius & Partner**
**Patentanwälte Rechtsanwälte mbB**
**Siebertstraße 3**
**81675 München (DE)**

(54) **TITANIUM COMPOSITE MATERIAL**

(57)     A titanium composite material according to an aspect of the present invention includes: a joined body including a titanium material and a metal material other than the titanium material; and a chemical conversion layer formed on a surface of the joined body, the chemical conversion layer containing Zr and/or P, and the amount of Zr or P adhered per unit area in the chemical conversion layer satisfying at least one of $Z_{Ti}/Z_m < 0.20$ or $P_{Ti}/P_m < 0.54$. $Z_{Ti}$ represents an amount of Zr adhered per unit area in the chemical conversion layer formed on a surface of the titanium material, $Z_m$ represents an amount of Zr adhered per unit area in the chemical conversion layer formed on a surface of the metal material, $P_{Ti}$ represents an amount of P adhered per unit area in the chemical conversion layer formed on the surface of the titanium material, and $P_m$ represents an amount of P adhered per unit area in the chemical conversion layer formed on the surface of the metal material.

FIG. 3

```
INGOT
  ↓
HOT WORKING
  ↓
SHOT-PEENING
  ↓
KOLENE TREATMENT
  ↓
PICKLING TREATMENT → CLEANING WITH FeCl₃
  ↓
TITANIUM MATERIAL → INSULATING
  ↓
JOINING
  ↓
CLEANING
  ↓
WORKING
  ↓
CHEMICAL CONVERTING → ELECTRODEPOSITION COATING
  ↓
TITANIUM COMPOSITE MATERIAL
```

EP 3 916 117 A1

**Description**

[Technical Field of the Invention]

The present invention relates to a titanium composite material.

Priority is claimed on Japanese Patent Application No. 2019-009748, filed on January 23, 2019, the content of which is incorporated herein by reference.

[Related Art]

From the viewpoint of improving fuel economy by weight reduction, attempts have been made to apply a relatively lightweight aluminum alloy, fiber-reinforced plastic (also referred to as "FRP"), or the like as a constituent material of a vehicle body in the field of transport mechanisms such as vehicles and motorcycles.

For example, Non-Patent Document 1 discloses a vehicle body frame using aluminum and a steel material for weight reduction.

Industrial pure titanium or a titanium alloy (hereinafter, simply referred to as "titanium material") has excellent strength, corrosion resistance, lightweight properties, and the like. Therefore, titanium materials are useful from the viewpoint of vehicle body weight reduction. However, in a case where titanium is used as a member for a vehicle outer panel, the adhesion of an electrodeposition coating film required for coating may decrease. As a result, the subsequent coating may be adversely affected. This is because a dense oxide film (passive film formed of $TiO_2$) that reduces the adhesion of the coating film is formed on a titanium surface.

Titanium has excellent corrosion resistance due to the above-described passive film. Accordingly, there has been no need to perform a corrosion resistance-improving treatment such as electrodeposition coating on titanium. However, titanium materials have been required to have improved coating film adhesion with the expansion of the application field of titanium materials. For example, in a case where a titanium material is used as a vehicle outer panel, it is necessary to coat the titanium in order to improve the aesthetic appearance of the vehicle. However, there have been only a few attempts to improve the electrodeposition coating properties of the titanium material.

[Prior Art Document]

[Non-Patent Document]

[Non-Patent Document 1] OKADA et al., "Environmental Protection of Pretreatment for Carbody", Surface Technology, The Surface Finishing Society of Japan, 2004, Vol. 55, No. 11, pp. 719 to 724
[Non-Patent Document 2] HIROYOSHI SOEJIMA, "Electron Beam Microanalysis" published by NIKKAN KOGYO SHIMBUN, LTD., pp. 111 to 112

[Disclosure of the Invention]

[Problems to be Solved by the Invention]

An object of the present invention is to provide a titanium composite material that solves the above problem and has good coating film adhesion.

[Means for Solving the Problem]

The present invention is contrived to solve the above problem, and the gist thereof is a titanium material and a titanium composite material described below.

(1) A titanium composite material according to an aspect of the present invention includes: a joined body including a titanium material and a metal material other than the titanium material; and a chemical conversion layer formed on a surface of the joined body, the chemical conversion layer containing Zr and/or P, and the amount of Zr or P adhered per unit area in the chemical conversion layer satisfying at least one of Expression (i) and Expression (ii).

$$Z_{Ti}/Z_m < 0.20 \ ... \ (i)$$

$$P_{Ti}/P_m < 0.54 \ldots \text{(ii)}$$

Respective symbols in Expressions (i) and (ii) are defined as follows.

$Z_{Ti}$: An amount of Zr adhered per unit area in the chemical conversion layer formed on a surface of the titanium material

$Z_m$: An amount of Zr adhered per unit area in the chemical conversion layer formed on a surface of the metal material

$P_{Ti}$: An amount of P adhered per unit area in the chemical conversion layer formed on the surface of the titanium material

$P_m$: An amount of P adhered per unit area in the chemical conversion layer formed on the surface of the metal material

(2) In the titanium composite material according to (1), the Fe content of the titanium material may be 0.50% or less by mass%, and a region where Fe is detected by EPMA analysis on the surface of the titanium material may be less than 3.0% by area ratio.

(3) In the titanium composite material according to (1) or (2), the metal material may be one or more selected from steel, industrial pure aluminum, an aluminum alloy, industrial pure magnesium, and a magnesium alloy.

(4) The titanium composite material according to any one of (1) to (3) may further include a coating film on the chemical conversion layer.

(5) In the titanium composite material according to any one of (1) to (4), the amount of Zr or P adhered per unit area in the chemical conversion layer may satisfy at least one of Expression (i') or Expression (ii').

$$0.05 \leq Z_{Ti}/Z_m < 0.20 \ldots \text{(i')}$$

$$0.03 \leq P_{Ti}/P_m < 0.54 \ldots \text{(ii'')}$$

(6) The titanium composite material according to any one of (1) to (5) may further include an insulating material disposed between the titanium material and the metal material.

[Effects of the Invention]

According to the present invention, it is possible to obtain a titanium composite material having good coating adhesion.

[Brief Description of the Drawings]

FIG. 1 shows structure photographs of local contamination with Fe.
FIG. 2 is a schematic view showing a test piece in which a titanium material is joined to a metal material.
FIG. 3 is a flowchart showing an example of a method of manufacturing a titanium composite material.

[Embodiments of the Invention]

The inventors have conducted various studies in order to obtain a titanium material having good coating adhesion. As a result, they found that in a case where a titanium material is combined with a metal material other than a titanium material (hereinafter, referred to as "non-titanium material") to form a composite material, the coating film adhesion of the titanium material is improved.

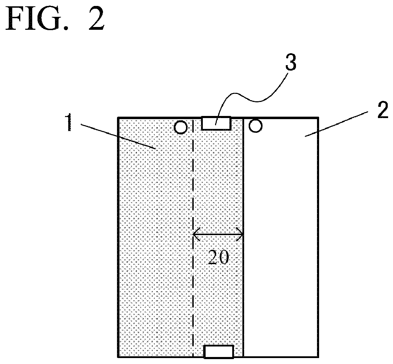

According to general technical knowledge, a dense passive film is formed on the surface of a titanium material, and a passive film hinders the formation of a chemical conversion film, thereby reducing coating film adhesion. However, the inventors performed chemical conversion and electrodeposition coating on, for example, a test piece in which a titanium material is joined to a non-titanium material as shown in FIG. 2. Thus, they confirmed that the electrodeposition coating properties of the titanium material may be improved. In addition, in the analysis of the test piece after the chemical conversion and before the electrodeposition coating, they confirmed that a minute amount of a chemical conversion film may be formed on a surface of the titanium material to the extent that quantitative evaluation is difficult. In a case where two titanium materials were joined to each other to form a test piece of FIG. 2 and the test piece was subjected to chemical conversion and electrodeposition coating, it was not possible to secure the adhesion of the electrodeposition coating film as in a case of a usual titanium material.

It is not clear why the coating film adhesion of the titanium material is improved in a case where the titanium material is combined with a metal other than the titanium material. The inventors presumed that the improvement in coating film adhesion is due to a local battery effect. This is because, for example, in a case where the titanium material is combined with a metal less noble than titanium (for example, steel, industrial pure aluminum, aluminum alloy, industrial pure magnesium, magnesium alloy, and the like), a particularly remarkable improvement in adhesion is observed. However, even in a case where an insulating material is disposed between the titanium material and the non-titanium material, it is possible to obtain the adhesion-improving effect.

It was also found that it is difficult to uniformly increase the coating film adhesion only by combining the titanium material with a metal other than the titanium material. As a method of evaluating the coating film adhesion, a cross-cut test (JIS K 5600-5-6: 1999) or a DuPont impact test (JIS K 5600-5-3: 1999) is performed. The cross-cut test is performed to evaluate the adhesion of a narrow region (a square region of about 10 mm square). According to the cross-cut test, the test piece composed of the above-described titanium composite material was determined to have good adhesion. The DuPont impact test is performed to evaluate the adhesion of a wide region (usually 200 mm by 100 mm). According to the DuPont test, the test piece composed of the above-described titanium composite material was determined to have poor adhesion.

The inventors further studied a method of securing the coating film adhesion over the whole Ti material. As a result, the following findings (a) to (e) were obtained.

(a) In existing production lines for vehicles or the like, members for a vehicle outer panel are usually coated in an assembled state from the viewpoint of productivity. This also applies to a titanium composite material, and a titanium material and a material other than the titanium material are coated in a state of being assembled and joined to each other. In the coating, specifically, chemical conversion, electrodeposition coating, and finish coating are performed in order.

(b) In the chemical conversion step, a chemical reaction occurs in the material joined to the titanium, and a chemical conversion film is formed. It is generally thought that since a surface of the titanium material is covered with a passive film formed of $TiO_2$, no chemical reaction occurs, and no chemical conversion film is formed. However, the inventors found that a thick chemical conversion film is locally formed on the surface of the titanium material. Local formation of a chemical conversion film is not preferable since the adhesion of the coating film is reduced in the subsequent electrodeposition coating step.

(c) As a result of further studies, the inventors found that local formation of a chemical conversion film is due to local contamination with Fe on the surface of the titanium material. In a case where the surface of the titanium material is contaminated with Fe, Fe elutes, and an anode reaction occurs so that electrons are emitted. Meanwhile, since Fe elutes and a titanium surface appears, a cathode reaction occurs in the titanium surface. It is thought that a chemical conversion film is locally formed on the surface of the titanium material by such reactions.

(d) By suppressing local contamination with Fe, local formation of a chemical conversion film on the surface of the titanium material can be suppressed, and the adhesion of the coating film can be improved. In addition, a slight chemical conversion film may be formed at a place not contaminated with Fe. However, it is presumed that the chemical conversion film obtained by performing chemical conversion on a composite material formed of a titanium material from which local contamination with Fe has been removed is thinly and uniformly formed on the surface of the titanium material. It is expected that such a thin and uniform chemical conversion film will not adversely affect the adhesion between the titanium material and the coating film.

(e) In addition, by suppressing local contamination with Fe, it is possible to suppress unnecessary chemical conversion occurring on the titanium material. As a result, for example, the amount of electrolyte required for chemical conversion can be significantly reduced compared with a case of an Al composite material using Al, and thus the environmental load and the manufacturing cost can be reduced.

The present invention is contrived based on the findings. Hereinafter, requirements for the titanium composite material according to this embodiment will be described in detail. In the following description, "%" expressing the content means "mass%".

1. Titanium Material

A titanium composite material according to an aspect of the present invention includes a joined body including a titanium material and a metal material other than the titanium material, and a chemical conversion layer formed on a surface of the joined body. First, a titanium material suitable as a material of a titanium composite material according to this embodiment will be described. However, characteristics of the titanium material to be described below are merely one method for obtaining the titanium composite material according to this embodiment. Therefore, it should be noted that the characteristics of the titanium material to be described below do not limit the titanium composite material according to this embodiment.

1-1. Chemical Composition of Titanium Material

The chemical composition of the titanium material used as a material of the titanium composite material is not particularly limited. However, it is desirable to easily distinguish between Fe existing on the surface and reducing the coating film adhesion and Fe contained as an alloy component in the titanium material. Therefore, it is desirable to specify the Fe content in the titanium material. In addition, the lower the Fe content in the titanium material, the higher the workability of the titanium material. For the reasons described above, the Fe content of the titanium material used as a material of the titanium composite material is preferably 0.50% or less. The lower the Fe content of the titanium material, the more preferable. The Fe content of the titanium material is more preferably 0.20% or less, and even more preferably 0.10% or less.

The content of other elements is not particularly limited as long as the content is similar to the elements which may be included in the general industrial pure titanium or titanium alloy. Here, industrial pure titanium means a metal material containing 98.8% or greater of Ti and the remainder consisting of impurities. Examples of a generally used industrial pure titanium include JIS types 1 to 4 and ASTM/ASME Grades 1 to 4. Examples of impurity elements in the industrial pure titanium include C, H, O, N, and Fe. For example, the contents of the elements other than Fe are as follows: C: 0.08% or less, H: 0.015% or less, O: 0.40% or less, and N: 0.05% or less.

Examples of a general titanium alloy include corrosion-resistant titanium alloys. As corrosion-resistant titanium alloys, alloy types such as JIS types 11, 12, 13, 21, and 22, ASTM/ASME Grade 7, ASTM/ASME Grade 11, ASTM/ASME Grade 13, and ASTM/ASME Grade 14 are known.

In the corrosion-resistant titanium alloy, the contents of the respective elements other than Fe are, for example, as follows: C: 0.08% or less, H: 0.015% or less, O: 0.35% or less, N: 0.05% or less, Pd: 0.25% or less, Co: 0.80% or less, Ru: 0.06% or less, and Ni: 0.6% or less.

An $\alpha$-type titanium alloy, an $\alpha+\beta$-type titanium alloy, or a $\beta$-type titanium alloy other than the above-described corrosion-resistant titanium alloy may be used as long as the Fe content is satisfied.

1-2. Fe Detection Region of Titanium Material

In a case where the surface of the titanium material is locally contaminated with Fe, Fe on the surface is eluted by the subsequent chemical conversion, and a local anode reaction, that is, a microanode is generated. Due to the elution of Fe, titanium appears on the titanium surface instead of a passive film formed of $TiO_2$, and a microcathode is generated. As a result, a chemical conversion layer is locally formed on the surface of the titanium material, resulting in a non-uniform surface state. In a case where electrodeposition coating is performed in such a non-uniform surface state, the adhesion of the electrodeposition coating film is reduced.

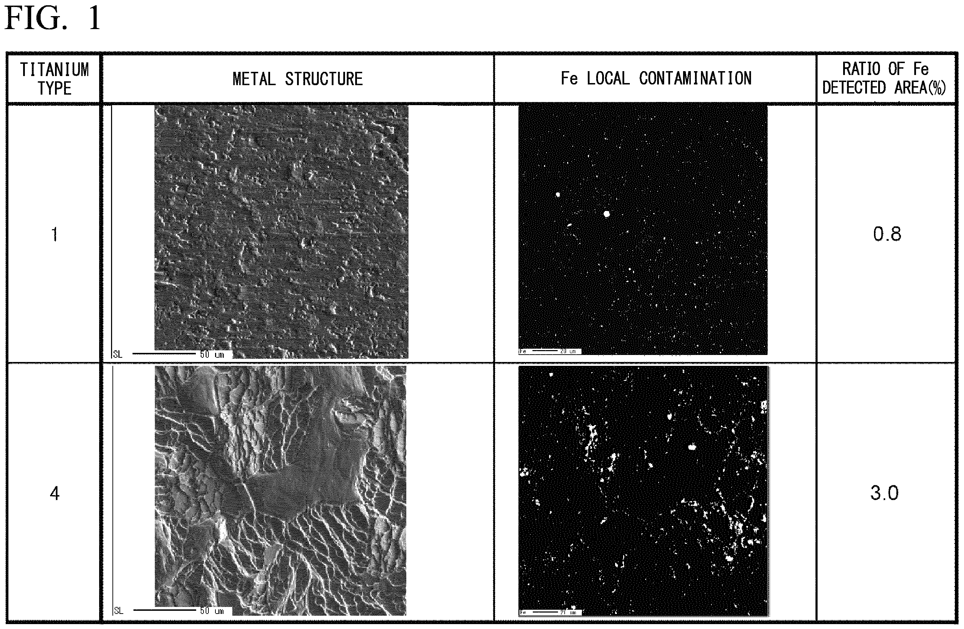

The above fact is clearly shown in the structure photographs of FIG. 1. In the structure photograph of titanium type 1 in FIG. 1, the region contaminated with Fe was small, and then an electrodeposition coating film having good adhesion was formed. In a case of titanium type 4, the region contaminated with Fe was large, and then an electrodeposition coating film having poor adhesion was formed. Therefore, in order to improve the electrodeposition coating film adhesion, it is effective to suppress local contamination with Fe on the surface of the titanium material before the chemical conversion.

Therefore, in the titanium material used as a material of the titanium composite material, the region where Fe is detected by EPMA analysis (hereinafter, simply referred to as "Fe detection region") is preferably less than 3.0% in terms of area ratio on the surface of the titanium material. The Fe detection region is more preferably less than 1.0% in terms of area ratio. Accordingly, as will be described later, it is possible to obtain a titanium composite material in which the amount of Zr or P adhered per unit area in the chemical conversion layer satisfies at least one of Expression (i) and Expression (ii).

Here, the following case can be considered as a cause of local contamination of the surface of the titanium material with Fe. Specifically, shot-peening is performed on the surface of the titanium material for descaling during manufacturing. Then, the iron of the shot used in this case remains on the titanium surface, and thus may cause local contamination with Fe on the surface of the titanium material.

In addition, the titanium material may be manufactured on the same manufacturing line as the line for producing stainless steel products and other steel materials. Therefore, in a case where Fe adheres to the manufacturing line, the surface of the titanium material may be contaminated with Fe. The method of suppressing contamination with Fe will be described in a manufacturing method to be described later.

1-3. Fe Detection Method

In the titanium material used as a material of the titanium composite material, EPMA is used to detect Fe on the surface, that is, to measure a Fe detection region. In the measurement, the following threshold is provided to detect Fe. The following method was used to calculate the threshold.

First, two samples to be measured are prepared. One surface is polished from its front surface up to a depth of 1/2 sheet thickness with emery paper using SiC as abrasive grains to remove Fe contamination adhering to the surface. Next, polishing is started with coarse abrasive grains of #80, and finally, unevenness is reduced with #1200. Then, finish polishing is performed with a buffing powder composed of an $Al_2O_3$ powder such as an alumina powder (BAIKALOX, manufactured by Baikowski, 0.3 $\mu$m diameter) to prepare an analysis surface.

The measurement of a background signal intensity of Fe is performed at 500 $\times$ 500 points arranged in a grid pattern on the analysis surface, and an average N(Fe) of background signal intensities of Fe at the respective measurement points is calculated. In general, the background signal intensity of Fe is measured using high-purity Ti in many cases. However, in the case of a titanium material as a material of the titanium composite material according to this embodiment, in order to distinguish between Fe caused by surface contamination and Fe solid-solubilized in the titanium material, a material to be measured is used to measure the background signal intensity.

In the titanium material as a material of the titanium composite material according to this embodiment, Expression (1) is defined as a threshold intensity of Fe detection according to the method described in Non-Patent Document 2 in order to increase the accuracy of Fe detection. For example, in the EPMA measurement in Examples, in a case where a signal intensity higher than the threshold is obtained, this means that Fe caused by contamination exists at the corresponding measurement point with a probability of 99.85%.

$$TV_{Fe}=N(Fe)+3N(Fe)^{1/2} \dots (1)$$

The respective symbols in Expression (1) are defined as follows.

$TV_{Fe}$: Threshold intensity of Fe detection
N(Fe): Average background signal intensity of Fe

The measurement is performed at 500 $\times$ 500 points arranged in a grid pattern on the other surface of the sample to be measured. The total number of points at which an intensity equal to or higher than the threshold intensity is counted is divided by the total number of measurement points, that is, 500 $\times$ 500, and the resulting value is expressed in percentage and defined as an area ratio of the region where Fe is detected.

In the specific conditions of the EPMA analysis, the accelerating voltage is 15 kV, the irradiation current is 100 nA, and the number of measurement points is 500 $\times$ 500. The beam shape is a spot shape, the measurement pitch is 0.4 $\mu$m, and the measurement time is 30 msec per point. The dispersive crystals used are LIFH (for Fe K$\alpha$ rays) and LIF (for Ti K$\alpha$ rays).

2. Titanium Composite Material

A titanium composite material according to this embodiment includes a joined body including a titanium material and a metal material other than the titanium material, and a chemical conversion layer formed on a surface of the joined body.

2-1. Titanium Material and Metal Material

The joined body includes a titanium material and a metal material.

As for the type of titanium material, for example, the above-described titanium material is preferably used. Accordingly, the Fe content of the titanium material may be 0.50% or less by mass%, and the region where Fe is detected by EPMA analysis on a surface of the titanium material may be less than 3.0% by area ratio. Even in a case where the Fe content of the titanium material is 0.50% or less, a chemical conversion layer of the titanium composite material satisfies requirements to be described later in a case where the surface contamination of the titanium material with Fe is suppressed before chemical conversion. In addition, adjusting the area ratio of a Fe detection region on the surface of the titanium material to be less than 3.0% is merely one example of a method for adjusting the amount of Zr or P adhered per unit area in the chemical conversion layer within a range to be described later. In addition, the area ratio of the Fe detection region on the surface of the titanium material may vary before and after chemical conversion. Accordingly, the Fe content of the titanium material and the area ratio of the Fe detection region on the surface of the titanium material are not particularly limited.

The metal material may be a metal material other than the titanium material, that is, a metal material of a type different from the titanium material. As the metal material, one or more selected from steel, industrial pure aluminum, an aluminum alloy, industrial pure magnesium, and a magnesium alloy are used.

Steel, an aluminum alloy, and a magnesium alloy may each be a general steel or alloy type. Here, industrial pure aluminum refers to aluminum containing 99.00% or greater of Al, to which other elements are not intentionally added. Industrial pure magnesium refers to magnesium containing 99.0% or greater of Mg, to which other elements are not intentionally added.

2-2. Chemical Conversion Layer

A chemical conversion layer is formed on a surface of the above-described joined body. The chemical conversion layer is formed on the surface of the joined body by the use of a Zr-based chemical conversion liquid or a zinc phosphate-based chemical conversion liquid. By the chemical conversion using a Zr-based chemical conversion liquid (hereinafter, simply referred to as "Zr-based chemical conversion"), a Zr-containing chemical conversion layer is formed. By the chemical conversion using a zinc phosphate-based chemical conversion liquid (hereinafter, simply referred to as "zinc phosphate-based chemical conversion"), a P-containing chemical conversion layer is formed. Therefore, the chemical conversion layer contains Zr and/or P. The chemical conversion layer subjected to the Zr-based chemical conversion is usually 15 to 20 nm, and the chemical conversion layer subjected to the zinc phosphate-based chemical conversion is usually about 1.0 to 2.0 $\mu$m in thickness.

The amount of Zr or P adhered per unit area in the chemical conversion layer satisfies at least one of Expression (i) and Expression (ii). In a case where only Zr is detected on the chemical conversion layer, only Expression (i) may be satisfied. In a case where only P is detected on the chemical conversion layer, only Expression (ii) may be satisfied.

$$Z_{Ti}/Z_m < 0.20 \ ... \ (i)$$

$$P_{Ti}/P_m < 0.54 \ ... \ (ii)$$

Respective symbols in Expressions (i) and (ii) are defined as follows.

$Z_{Ti}$: An amount of Zr adhered per unit area in the chemical conversion layer formed on the surface of the titanium material

$Z_m$: An amount of Zr adhered per unit area in the chemical conversion layer formed on the surface of the metal material

$P_{Ti}$: An amount of P adhered per unit area in the chemical conversion layer formed on the surface of the titanium material

$P_m$: An amount of P adhered per unit area in the chemical conversion layer formed on the surface of the metal material

In a case where the left side value (that is, $Z_{Ti}/Z_m$) in Expression (i) is 0.20 or greater, the chemical conversion layer locally formed by the Zr-based chemical conversion has a significant influence, and the adhesion of the coating film to be subsequently formed is reduced. Therefore, the left side value in Expression (i) is less than 0.20. In order to obtain good coating film adhesion, the left side value in Expression (i) is preferably 0.15 or less, and more preferably 0.10 or less.

The lower limit of the left side value ($Z_{Ti}/Z_m$) in Expression (i) is not particularly limited, but may be, for example, 0.05 or greater. That is, the amount of Zr adhered per unit area in the chemical conversion layer may satisfy Expression (i') instead of Expression (i).

$$0.05 \leq Z_{Ti}/Z_m < 0.20 \ ... \ (i')$$

The lower limit of $Z_{Ti}/Z_m$ may be 0.06 or greater, 0.08 or greater, or 0.10 or greater.

Similarly, in a case where the left side value (that is, $P_{Ti}/P_m$) in Expression (ii) is 0.54 or greater, the chemical conversion layer formed by the zinc phosphate-based chemical conversion has a significant influence, and the adhesion of the coating film to be subsequently formed is reduced. Therefore, the left side value in Expression (ii) is less than 0.54. In order to obtain good coating film adhesion, the left side value in Expression (ii) is preferably 0.50 or less, more preferably 0.45 or less, and even more preferably 0.30 or less.

The lower limit of the left side value ($P_{Ti}/P_m$) in Expression (ii) is not particularly limited, but may be, for example, 0.03 or greater. That is, the amount of P adhered per unit area in the chemical conversion layer may satisfy Expression (ii') instead of Expression (ii).

$$0.03 \leq P_{Ti}/P_m < 0.54 \ ... \ (ii')$$

The lower limit of $P_{Ti}/P_m$ may be 0.05 or greater, 0.06 or greater, 0.08 or greater, or 0.10 or greater.

The amount of Zr or P adhered is calculated by the following procedure. Specifically, samples subjected to the Zr-based chemical conversion are subjected to fluorescent X-ray analysis, in which four standard samples with a known amount of Zr adhered, and one sample composed of a steel sheet not subjected to the Zr-based chemical conversion, that is, a total of five samples are references. Next, a calibration curve of the relationship between the Zr-L ray intensity and the amount of Zr adhered is made. Based on the relationship between the calibration curve made as above and the intensity measured by the fluorescent X-ray analysis, the amount of Zr adhered is calculated in each of the titanium material and the metal material of the titanium composite material.

By the same procedure, samples subjected to the zinc phosphate-based chemical conversion are subjected to fluorescent X-ray analysis to make a calibration curve of the relationship between the P-K ray intensity and the amount of P adhered. Similarly to the above, based on the relationship between the calibration curve made as above and the intensity measured by the fluorescent X-ray analysis, the amount of P adhered is calculated in each of the titanium material and the metal material of the titanium composite material. In the fluorescent X-ray analysis, the accelerating voltage is 12 kV and the analysis diameter is $\varphi$2 mm.

2-3. Coating Film

The titanium composite material according to this embodiment may further include a coating film on the chemical conversion layer. The type of coating film is not particularly limited, but for example, an electrodeposition coating film formed by electrodeposition coating and a finish coating film formed of a finish coating layer are considered. Usually, the electrodeposition coating film has a thickness of about 15 to 25 $\mu$m, and the finish coating film has a thickness of about 75 to 90 $\mu$m. Examples of the coating film formed in the finish coating layer include coating films such as a coating film obtained by intermediate coating, a base coating, and a clear coating.

In the determination of whether an object has the structure of the titanium composite material according to this embodiment, fluorescent X-ray analysis is also performed for examination by the same procedure as described above. In this case, in a case where the object has an electrodeposition coating film or the like, the object is cut and immersed in a vehicle coating release material, and then the finish coating and the electrodeposition coating are removed to perform the examination.

The titanium composite material may further have an insulating material disposed between the titanium material and the metal material. Accordingly, it is possible to further improve the corrosion resistance of the titanium composite material. The insulating material is, for example, an electrically insulating structural adhesive material (epoxy resin-based adhesive or the like). The titanium composite material may not include the insulating material. That is, the titanium material and the metal material may be joined to be in contact with each other. The insulating material may be disposed only in a part of a joint portion between the titanium material and the metal material.

3. Manufacturing Method

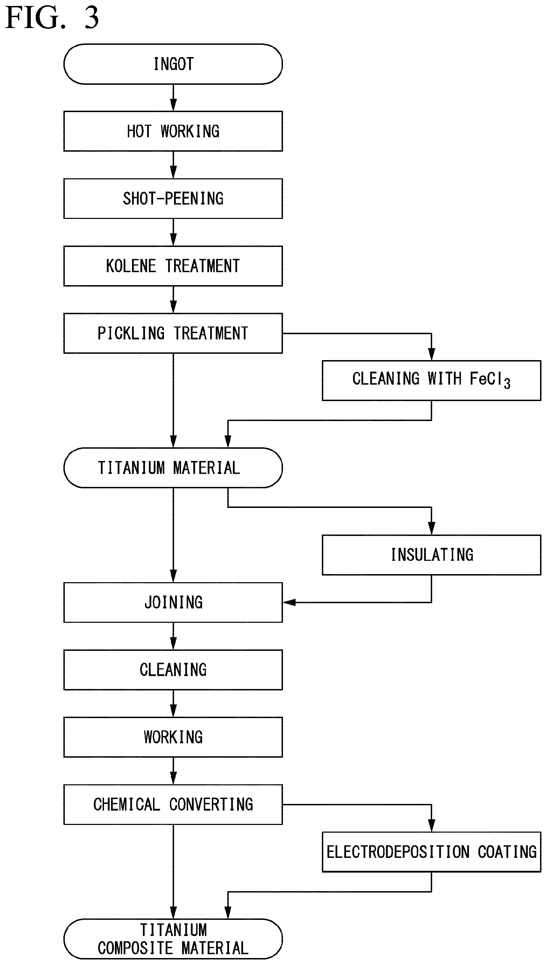

Hereinafter, a preferable method of manufacturing a titanium composite material according to this embodiment will be described. Regardless of the manufacturing method, the titanium composite material according to this embodiment can have effects as long as it has the above-described configuration. However, for example, with a manufacturing method as illustrated in FIG. 3, the titanium composite material according to this embodiment can be stably obtained.

3-1. Titanium Material Manufacturing Method

In the manufacturing of the titanium material as a material of the titanium composite material according to this embodiment, first, an ingot of a titanium material having the above-described chemical composition is produced. Next, the obtained ingot is heated and hot-worked. The hot working method is not particularly limited, and examples thereof include hot rolling and hot forging.

Usually, in order to remove the scale formed during hot working, the titanium material after hot working is subjected to shot-peening. Here, shot-peening is a surface treatment that is performed to modify the surface by causing a large number of small spheres (hereinafter, also referred to as "shots") to collide. In a case where steel or the like is used for the shot pieces, Fe of the shot pieces may remain on the surface of the titanium material, and may not be completely removed by the subsequent pickling or the like.

Therefore, in the method of manufacturing the titanium composite material according to this embodiment, it is desirable that a shot used for shot blasting be made of alumina. After shot blasting, usually, a kolene treatment, which is a treatment with an alkali molten salt bath containing NaOH as a main component with an oxidizing agent such as $NaNO_3$ and $KNO_3$ added thereto, and pickling are preferably performed. However, in a case where a shot made of steel is used, it is difficult to remove Fe on the surface only by the two treatments. Accordingly, it is desirable that sufficient water washing be performed after the removal on the surface with a ferric chloride ($FeCl_3$) solution.

After hot rolling, annealing and pickling may be appropriately optionally performed. After the pickling, cold working is preferably performed, and after the cold rolling, a heat treatment such as annealing is appropriately performed.

The titanium material may be manufactured using the same manufacturing line as steel materials such as stainless steel products. In such a case, Fe may adhere to equipment on the manufacturing line, and Fe contamination may occur on the surface of the titanium material. Therefore, in the method of manufacturing the titanium composite material according to this embodiment, it is desirable that the titanium material be manufactured using a manufacturing line to which no Fe adheres.

3-2. Titanium Composite Material Manufacturing Method

3-2-1. Joining

The titanium material is joined to a metal material other than the titanium material to form a joined body. The joining method is not particularly limited, but for example, a rivet, a joining clipper, or the like is preferably used for joining. In addition, in the titanium composite material according to this embodiment, a titanium material and a metal material different from the titanium material are used. Therefore, in a case where there is a concern about corrosion in the usage environment due to a potential difference, the titanium material and the metal material are preferably insulated and joined in the joined body. In this case, the titanium material and the metal material may be joined via an insulating material such as an electrically insulating structural adhesive material (epoxy resin-based adhesive or the like).

The possibility of adhesion of Fe to the surface of the titanium material is also high in the joining step. This is because Fe is inevitably mixed with and adhered to lubricating oil and a tool and the like used during joining. Therefore, after joining of the titanium material to the metal material other than the titanium material and before the chemical conversion, it is required to perform degreasing and sufficient water washing, air spraying, flushing, or the like to remove Fe adhering to the surface of the titanium material.

The joined body in which the titanium material is joined to the metal material is subjected to various shaping such as pressing. In a case where Fe is not removed at the stage of this working, Fe may bite into the surface of the titanium material and may be difficult to remove. Therefore, after joining of the titanium material to the metal material other than the titanium material and before the working, it is required to perform degreasing and sufficient water washing, air spraying, flushing, or the like to remove Fe adhering to the surface of the titanium material.

3-2-2. Chemical Conversion

Next, the joined body in which the titanium material is joined to the metal material is degreased and washed with water. Then, chemical conversion is performed thereon. In the chemical conversion, a Zr-based chemical conversion liquid and/or a zinc phosphate-based chemical conversion liquid are/is usually used as a chemical. Examples of the composition of the Zr-based chemical conversion liquid include an aqueous solution in which hexafluorozirconium acid, $Zr(SO_4)_2$, $Zr(NO_3)_4$, $H_2ZrF_6$, or the like is neutralized with ammonium or the like.

Examples of the composition of the zinc phosphate-based chemical conversion liquid include a liquid based on a saturated aqueous solution of zinc phosphate [$Zn_3(PO_4)_2$] that contains zinc ion: 2.5 g/L, phosphate ion: 25 g/L (adjusted by adding phosphoric acid), nitrate ion: 25 g/L (adjusted by adding nitric acid), and fluorine ion (adjusted by adding Na fluoride): 500 ppm, and has free acidity adjusted to 1.5 points using sodium hydroxide. In addition, a commercially available Zr-based chemical conversion liquid or zinc phosphate-based chemical conversion liquid may be used.

The treatment temperature for the chemical conversion is preferably in a range of 30°C to 50°C. In a case where the chemical conversion temperature is lower than 30°C, the treatment time is long. In a case where the treatment temperature for the chemical conversion is higher than 50°C, the reaction of the chemical conversion proceeds too rapidly. Therefore, the chemical conversion temperature is preferably in the above range.

The chemical conversion time is preferably in a range of 60 to 180 seconds. In a case where the chemical conversion time is shorter than 60 seconds, the chemical conversion reaction does not sufficiently occur in the metal material in the titanium composite material. In a case where the chemical conversion time is longer than 180 seconds, the chemical conversion layer is too thick. Therefore, the chemical conversion temperature is preferably in the above range.

In the titanium composite material according to this embodiment, the chemical conversion is mainly performed on the metal material in the titanium composite material, and the chemical conversion on the titanium material is suppressed including the local one. As a result, in the titanium composite material according to this embodiment, the consumption of the chemical conversion liquid can be reduced.

Specifically, in the titanium composite material according to this embodiment, in a case where a Zr-based chemical conversion liquid is used as a chemical conversion liquid, the consumption of the Zr source used in the chemical conversion is about 1/2 that of a composite material using steel and Al.

3-2-3. Electrodeposition Coating

Electrodeposition coating is preferably performed on the titanium composite material subjected to chemical conversion. Examples of the electrodeposition coating material include modified epoxy resins such as polyether and polyamide. A commercially available product such as PN-1010 manufactured by NIPPONPAINT Co., Ltd. may be used. A voltage is preferably applied for electrodeposition coating so that an electrodeposition coating film has a film thickness in a range of 15 to 25 $\mu$m. Then, the resulting material is preferably baked at 160°C to 200°C for 10 to 30 minutes.

3-2-4. Finish Coating

Finish coating may be appropriately performed on the titanium composite material subjected to the electrodeposition coating. Examples of the finish coating include intermediate coating that is performed to hide the roughness of the electrodeposition coating and to improve chipping resistance, base coating for coloring, and clear coating to obtain a beautiful finish and durability. Examples of the coating materials for the above finish coating include a melanin-based resin for intermediate coating, an acrylic resin for base coloring, and an acryl resin for clear coating.

Hereinafter, the present invention will be described in greater detail with examples, but is not limited to the examples.

[Examples]

A joined body was produced using a titanium material having a chemical composition shown in Table 1 and a metal material having a chemical composition shown in Table 2. In Table 1, titanium type 1 is a titanium material obtained by subjecting a cold rolled material to batch annealing. Titanium type 2 is a titanium material obtained by subjecting a cold rolled material to batch annealing and pickling. Titanium types 3 to 5 are commercially available titanium materials. The titanium types 3 and 4 are titanium materials obtained by subjecting a cold rolled material to batch annealing, and the titanium type 5 is dull finished by annealing, pickling, and then cold rolling with a dull rolling roll having a uniformly roughened roll surface. Titanium type 6 is a commercially available titanium alloy material, which is a titanium material obtained by subjecting a cold-rolled material to batch annealing.

Fe contamination of the titanium types 1 to 6 was reduced by the following methods.

- Titanium Type 1 (invention example):
  At the stage of a hot rolled material before cold rolling, the titanium material was subjected to shot blasting using alumina, and then pickled. By performing shot blasting using alumina instead of commonly used steel balls, Fe remaining on the surface of the titanium material was suppressed.
- Titanium Type 2 (invention example):
  After cold rolling and batch annealing, the titanium material was pickled. Due to further pickling after the annealing, very little Fe remains on the surface of the titanium material.
- Titanium Type 3 (invention example):
  At the stage of a hot rolled material before cold rolling, the titanium material was subjected to shot blasting using alumina, and then pickled. The process was performed in the same manner as in the case of the titanium type 1, but the level of pickling was lower than in the case of the titanium type 1. Therefore, the Fe area ratio on the surface of the titanium material of the titanium type 3 was larger than in the titanium type 1.
- Titanium Type 4 (comparative example):
  At the stage of a hot rolled material before cold rolling, shot blasting was performed using alumina, and then pickling was performed. The process was performed in the same manner as in the cases of the titanium types 1 and 3, but the level of pickling was lower than in the case of the titanium type 3. As a result, pickling was not sufficiently performed, and the Fe area ratio on the surface of the titanium material of the titanium type 4 was larger than in the titanium type 3.

- Titanium Type 5 (comparative example);
  At the stage of a hot rolled material before cold rolling, shot blasting was performed using steel balls, and then pickling was performed. Since the shot blasting was performed using steel balls, the Fe component derived from the shot balls that could not be completely removed by pickling remained on the surface of the titanium material of the titanium type 5.

- Titanium Type 6 (invention example):
  At the stage of a hot rolled material before cold rolling, shot blasting was performed using alumina, and then pickling was performed. The Fe area ratio on the surface of the titanium material of the titanium type 6 was nearly the same as in the titanium type 3.

The titanium material and the metal material used for the joined body had a shape of 45 mm width × 150 mm length, and each was provided with a φ5 mm-hole for immersion in a chemical in an upper portion thereof. The titanium material and the metal material were overlapped and joined as shown in FIG. 2 using a joining clipper (GACHUCK (large) manufactured by OHTO CO., LTD.). The width of the joint portion is 20 mm as shown in FIG. 2. Therefore, the joined body has a size of 70 mm width × 150 mm length.

Here, in a test piece in which the titanium material was insulated from the metal material in the joined body, an insulating tape (NITOFLON No. 900UL manufactured by Nitto Denko Corporation) was cut to a width of 19 mm and attached to the region where the titanium material and the metal material overlapped and to the surface brought into contact with the joining clipper, thereby insulating the titanium material from the metal material. In addition, the area ratio of a Fe detection region on the surface of the titanium material was measured by EPMA analysis.

For the EPMA analysis, JXA-8530F manufactured by JEOL Ltd. was used. The accelerating voltage was 15 kV, the irradiation current was 100 nA, and the number of measurement points was 500 × 500. The beam shape was a spot shape, the measurement pitch was 0.4 μm, and the measurement time was 30 msec per point. The dispersive crystals used were LIFH (for Fe Kα rays) and LIF (for Ti Kα rays).

A joined body in which an aluminum alloy was joined to a steel material was also produced as a material according to the related art. Table 3 shows a chemical composition of the aluminum alloy used for the joined body. In addition, in order to confirm the effect of joining of the Ti material to the metal material other than the Ti material, a joined body in which a Ti material was joined to a Ti material by the above-described method was also produced.

[Table 1]

| Titanium type | Chemical composition (mass%, remainder: Ti and impurity) | | | | | | | | Fe detection region (%) | Sheet thickness (mm) | Remarks |
|---|---|---|---|---|---|---|---|---|---|---|---|
| | C | H | O | N | Fe | Al | V | Ti | | | |
| 1 | - | 0.002 | 0.03 | - | 0.02 | - | - | bal. | 0.8 | 0.6 | JIS H4600 TP270C Batch annealed material |
| 2 | - | 0.001 | 0.03 | - | 0.02 | - | - | bal. | 0.001 | 0.6 | JIS H4600 TP270C Pickled surface |
| 3 | - | 0.002 | 0.04 | - | 0.02 | - | - | bal. | 2.7 | 1.0 | ASTM Gr.1 Batch annealed material (commercially available) |
| 4 | - | 0.002 | 0.03 | - | 0.03 | - | - | bal. | 3.0 | 0.6 | ASTM Gr.1 Batch annealed material (commercially available) |
| 5 | - | 0.003 | 0.03 | - | 0.04 | - | - | bal. | 8.8 | 0.6 | ASTM Gr.1 Dull finished (commercially available) |
| 6 | 0.005 | 0.003 | 0.08 | - | 0.012 | 3.08 | 2.51 | bal. | 2.8 | 0.6 | ASTM Gr.9 Batch annealed material (commercially available) |

[Table 2]

| Metal material | Chemical composition (mass%, remainder: Fe and impurity) | | | | Sheet thickness (mm) | Remarks |
|---|---|---|---|---|---|---|
| | C | Mn | P | S | | |
| Steel material | 0.08 | 0.38 | 0.04 | 0.018 | 1.0 | JIS G3141 SPCC (commercially available) |

[Table 3]

| Aluminum | Chemical composition (mass%, remainder: Al and impurity) | | | | | | | | Sheet thickness (mm) | Remarks |
|---|---|---|---|---|---|---|---|---|---|---|
| | Si | Fe | Cu | Mn | Mg | Cr | Zn | Ti | | |
| Al alloy | 0.09 | 0.25 | 0.02 | 0.02 | 2.47 | 0.20 | - | 0.01 | 1.2 | A5052 JIS H4000 A5052-H34 (commercially available) |
| Pure Al | 0.31 | 0.52 | 0.01 | 0.01 | - | - | - | <0.01 | 1.2 | A1100 JIS H4000 A1100-H16 (commercially available) |

The produced joined bodies were cleaned and subjected to chemical conversion.

In Test Nos. 1 to 19, the cleaning conditions were as follows. First, preliminary degreasing (spraying) to remove dust, oil, and the like from the surface of the joined body was performed using an alkaline cleaning liquid. Next, the joined body was immersed in an alkaline cleaning liquid, and main degreasing was performed. The alkaline degreasing liquid was washed away by water mist spraying. Second cleaning was performed by water mist spraying, and finally, the oil, deposits, and iron adhering to the surface of the joined material were removed by high-pressure cleaning using high-pressure water. However, the joined body of Test No. 20 was not cleaned under the conditions.

In the chemical conversion, a Zr-based chemical conversion liquid and a zinc phosphate-based chemical conversion liquid were used. The test piece for Zr-based chemical conversion was subjected to ultrasonic cleaning for 60 seconds before the chemical conversion. Next, degreasing was performed using FC-E2001 manufactured by Nihon Parkerizing Co., Ltd., in which the solution temperature was adjusted to 43°C, and immersion was performed for 120 seconds. Next, cleaning was performed for 120 seconds with tap water. Then, the joined body was immersed for 120 seconds in a chemical conversion liquid adjusted to pH 4 using 10 mM/L of ammonium hexafluorozirconate, ammonia, and nitric acid. The liquid temperature during the immersion was 45°C. Then, water washing and drying for 10 minutes by a constant temperature oven at 45°C were performed.

Similarly, the test piece for zinc phosphate-based chemical conversion was also subjected to ultrasonic cleaning for 60 seconds before the chemical conversion. Next, degreasing was performed using FC-E2001 manufactured by Nihon Parkerizing Co., Ltd., in which the solution temperature was adjusted to 43°C, and immersion was performed for 120 seconds. Next, an immersion swing treatment was performed for 20 seconds at 25°C using a PL-Z surface adjusting liquid manufactured by Nihon Parkerizing Co., Ltd. Next, cleaning was performed for 120 seconds with tap water. Then, the joined body was immersed in a chemical conversion liquid obtained by adjusting PB-L3080 manufactured by Nihon Parkerizing Co., Ltd., and swung for 120 seconds. The liquid temperature during the immersion was 42°C. Then, water washing and drying for 10 minutes by a constant temperature oven at 45°C were performed.

(Measurement of Amount of Zr or P Adhered)

The amount of Zr or P adhered was calculated by the following procedure. Specifically, samples subjected to the Zr-based chemical conversion were subjected to fluorescent X-ray analysis, in which four standard samples with a known amount of Zr adhered, and one sample composed of a steel sheet not subjected to the Zr chemical conversion, that is, a total of five samples were references. Next, a calibration curve of the relationship between the Zr-L ray intensity and the amount of Zr adhered was made. Based on the relationship between the calibration curve made as above and the intensity measured by the fluorescent X-ray analysis, the amount of Zr adhered was calculated in each of the titanium material and the metal material of the titanium composite material.

By the same procedure, samples subjected to the zinc phosphate-based chemical conversion were subjected to fluorescent X-ray analysis to make a calibration curve of the relationship between the P-K ray intensity and the amount of P adhered. Similarly to the above, based on the relationship between the calibration curve made as above and the intensity measured by the fluorescent X-ray analysis, the amount of P adhered was calculated in each of the titanium material and the metal material of the titanium composite material.

For the measurement, an X-ray fluorescence spectrometer ZSX Primus II of 0-60 kV manufactured by Rigaku Corporation was used. In the measurement conditions, the accelerating voltage was 12 kV and the analysis diameter was φ2 mm.

(Measurement of Amount of Sludge Generated)

The amount of chemical conversion liquid consumed in the chemical conversion is evaluated as the amount of sludge generated. Here, sludge refers to a liquid that has undergone the reaction of the chemical conversion in the chemical conversion liquid.

The chemical conversion liquid after chemical conversion of 1 m² per 1 L of the chemical conversion liquid was stirred, and 10 mL of the liquid was put into a 10-mL measuring cylinder. The height of the sludge precipitated after being left for 4 hours was measured, and the height scale mL thereof was defined as an index of the amount of sludge generated. In the Zr-based chemical conversion, in a case where the amount of sludge generated was 1.0 mL or less, the amount of sludge generated was determined to be small and appropriate. In the zinc phosphate-based chemical conversion, in a case where the amount of sludge generated was 4.7 mL or less, the amount of sludge generated was determined to be small and appropriate.

In addition, electrodeposition coating was performed on the titanium composite material subjected to the chemical conversion. In this case, PN-1010 manufactured by NIPPONPAINT Co., Ltd. was used as an electrodeposition coating material. In the insulating joined body, the hanging holes of the titanium material and the metal material were connected by a conductive wire, and a potential was applied to the whole joined body to treat the whole joined body so that electrodeposition coating was possible. The voltage or the like was adjusted to adjust an electrodeposited film thickness to about 20 μm.

Then, the titanium composite material was sufficiently dried in air, put in an air oven at 170°C, and baked for 30 minutes.

(Adhesion Evaluation)

A DuPont impact test and a cross-cut test were performed on the titanium composite material after the baking in order to evaluate the adhesion of the electrodeposition coating film. A test piece had a size of 0.6 mm thickness × 45 mm width × 150 mm length. The DuPont impact test was performed by dropping a weight based on JIS K 5600-5-3: 1999. In this case, an impact form and a receiving base used had a diameter of 12.7 mm. A weight of 500 g was used, and 200 mm and 500 mm were set as drop heights. After the test, using No. 405 (JIS Z 1522: 2009, adapted product) manufactured by NICHIBAN Co., Ltd., a tape peeling test was performed to confirm the presence or absence of peeling of the coating film. In a case where peeling occurred after the drop from the two drop heights, the adhesion of the coating film was determined to be poor. The number N of tests was 3.

The cross-cut test was performed according to JIS K 5600-5-6: 1999. Specifically, 11 parallel cuts at equal intervals (1 mm) on a base and 11 parallel cuts orthogonal thereto were made using a small cutter to produce 100 squares. On this portion, a tape peeling test was performed with a tape having a width of 25 mm ± 1 mm and an adhesion strength of 10 ± 1 N per width according to IEC60454-2. In the 100 squares, the number of intersections at which no peeling had occurred was investigated. Here, in a case where the number of intersections at which the peeling had occurred was one or more, the adhesion of the coating film was determined to be poor. In the tables, "the number of accepted intersections/the total number of intersections (100)" is shown.

In a case where the adhesion of the coating film was not determined to be poor in both the DuPont impact test and the cross-cut test, the adhesion of the coating film was determined to be good.

The results of the titanium composite materials subjected to the Zr-based chemical conversion are shown below in Tables 4A and 4B. The results of the titanium composite materials subjected to the zinc phosphate-based chemical conversion are shown in Tables 5A and 5B.

[Table 4A]

| Test No. | Titanium type/Al alloy | Metal material | Conductive /Insulated | Amount of Zr adhered on Titanium material/Al alloy (mg/m²) | Amount of Zr adhered on metal material (mg/m²) | Average amount of Zr adhered (mg/m²) | $Z_{Ti}/Z_m$ | Amount of P adhered on Titanium material/Al alloy (mg/m²) | Amount of P adhered on metal material (mg/m²) | Average amount of P adhered (mg/m²) | $P_{Ti}/P_m$ | |
|---|---|---|---|---|---|---|---|---|---|---|---|---|
| 1 | 1 | Steel material | Conductive | 3.3 | 38.1 | 20.7 | 0.09 | - | - | - | - | Inventive examples |
| 2 | 1 | Steel material | Insulated | 2.4 | 39.4 | 20.9 | 0.06 | - | - | - | - | |
| 3 | 2 | Steel material | Conductive | 2.1 | 35.1 | 18.6 | 0.06 | - | - | - | - | |
| 4 | 2 | Steel material | Insulated | 2.0 | 35.0 | 18.5 | 0.06 | - | - | - | - | |
| 5 | 3 | Steel material | Conductive | 3.7 | 38.2 | 21.0 | 0.10 | - | - | - | - | |
| 6 | 3 | Steel material | Insulated | 3.9 | 39.7 | 21.8 | 0.10 | - | - | - | - | |
| 7 | 6 | Steel material | Conductive | 3.9 | 38.7 | 21.3 | 0.10 | - | - | - | - | |
| 8 | 6 | Steel material | Insulated | 4.2 | 39.5 | 21.9 | 0.11 | - | - | - | - | |
| 9 | 1 | Pure Al | Conductive | 4.4 | 40.1 | 22.3 | 0.11 | - | - | - | - | |
| 10 | 1 | Pure Al | Insulated | 4.1 | 41 | 22.6 | 0.10 | - | - | - | - | |
| 11 | 1 | Al alloy | Conductive | 3.8 | 46.2 | 25.0 | 0.08 | - | - | - | - | |
| 12 | 1 | Al alloy | Insulated | 4.2 | 47.1 | 25.7 | 0.09 | - | - | - | - | |
| 13 | 4 | Steel material | Conductive | 8.8 | 41.1 | 25.0 | 0.21* | - | - | - | - | Comparative examples |
| 14 | 4 | Steel material | Insulated | 8.4 | 42.1 | 25.3 | 0.20* | - | - | - | - | |
| 15 | 5 | Steel material | Conductive | 18.1 | 41.9 | 30.0 | 0.43* | - | - | - | - | |
| 16 | 5 | Steel material | Insulated | 19.3 | 42.2 | 30.8 | 0.46* | - | - | - | - | |
| 17 | Al alloy | Steel material | Conductive | 27.8 | 71.5 | 49.7 | 0.39* | - | - | - | - | Conventional examples |
| 18 | Al alloy | Steel material | Insulated | 31.4 | 55.6 | 43.5 | 0.56* | - | - | - | - | |
| 19 | 1 | 2 | Conductive | 3.2 | 4.8 | 4.0 | 0.67* | - | - | - | - | Comparative examples |
| 20 | 1 | Steel material | Insulated | 9.1 | 38.1 | 23.6 | 0.24* | - | - | - | - | |

The symbol "*" indicates that the value is out of scope of the present invention.

Underiline indicates that the value is out of characteristic range which is object of the present invention.

[Table 4B]

| Test No. | Height of sludge (mL/10mL) | Number of accepted points in cross-cut test | | DuPont impact test | | |
|---|---|---|---|---|---|---|
| | | Titanium material | Metal material | 200mm height | 500mm height | |
| 1 | 0.4 | 100/100 | 100/100 | Absence | Absence | Inventive examples |
| 2 | 0.3 | 100/100 | 100/100 | Absence | Absence | |
| 3 | 0.2 | 100/100 | 100/100 | Absence | Absence | |
| 4 | 0.2 | 100/100 | 100/100 | Absence | Absence | |
| 5 | 0.7 | 100/100 | 100/100 | Absence | Absence | |
| 6 | 0.7 | 100/100 | 100/100 | Absence | Absence | |
| 7 | 0.8 | 100/100 | 100/100 | Absence | Absence | |
| 8 | 0.7 | 100/100 | 100/100 | Absence | Absence | |
| 9 | 0.8 | 100/100 | 100/100 | Absence | Absence | |
| 10 | 0.8 | 100/100 | 100/100 | Absence | Absence | |
| 11 | 0.7 | 100/100 | 100/100 | Absence | Absence | |
| 12 | 0.8 | 100/100 | 100/100 | Absence | Absence | |
| 13 | 1.2 | 100/100 | 100/100 | Presence | Presence | Comparative examples |
| 14 | 1.3 | 100/100 | 100/100 | Absence | Presence | |
| 15 | 1.9 | 100/100 | 100/100 | Presence | Presence | |
| 16 | 1.8 | 100/100 | 100/100 | Absence | Presence | |

(continued)

| Test No. | Height of sludge (mL/10mL) | Number of accepted points in cross-cut test | | DuPont impact test | | |
|---|---|---|---|---|---|---|
| | | Titanium material | Metal material | 200mm height | 500mm height | |
| 17 | <u>3.2</u> | 100/100 | 100/100 | Absence | Absence | Conventional examples |
| 18 | <u>2.8</u> | 100/100 | 100/100 | Absence | Absence | |
| 19 | 0.3 | 100/100 | 10/100 | Absence | <u>Presence</u> | Comparative examples |
| 20 | 0.7 | 100/100 | 10/100 | Absence | <u>Presence</u> | |
| The symbol "*" indicates that the value is out of scope of the present invention. <u>Underiline</u> indicates that the value is out of characteristic range which is object of the present invention. | | | | | | |

[Table 5A]

| Test No. | Titanium type/Al alloy | Metal Material | Conductive/Insulated | Amount of Zr adhered on Titanium material/Al alloy (mg/m²) | Amount of Zr adhered on metal material (mg/m²) | Average amount of Zr adhered (mg/m²) | $Z_{Ti}/Z_m$ | Amount of P adhered on Titanium material/Al alloy (mg/m²) | Amount of P adhered on metal material (mg/m²) | Average amount of P adhered (mg/m²) | $P_{Ti}/P_m$ | |
|---|---|---|---|---|---|---|---|---|---|---|---|---|
| 21 | 1 | Steel material | Conductive | - | - | - | - | 121.1 | 249.6 | 185.4 | 0.49 | Inventive examples |
| 22 | 1 | Steel material | Insulated | - | - | - | - | 13.45 | 257.2 | 135.3 | 0.05 | |
| 23 | 2 | Steel material | Conductive | - | - | - | - | 125.1 | 248.6 | 186.9 | 0.50 | |
| 24 | 2 | Steel material | Insulated | - | - | - | - | 18.7 | 237.9 | 128.3 | 0.08 | |
| 25 | 3 | Steel material | Conductive | - | - | - | - | 110.2 | 229.1 | 169.7 | 0.48 | |
| 26 | 3 | Steel material | Insulated | - | - | - | - | 20.3 | 248.3 | 134.3 | 0.08 | |
| 27 | 6 | Steel material | Conductive | - | - | - | - | 115.2 | 255.1 | 185.15 | 0.45 | |
| 28 | 6 | Steel material | Insulated | - | - | - | - | 14.2 | 248.2 | 131.2 | 0.06 | |
| 29 | 1 | Pure Al | Conductive | - | - | - | - | 116.2 | 240.1 | 178.15 | 0.48 | |
| 30 | 1 | Pure Al | Insulated | - | - | - | - | 143.0 | 281.0 | 212 | 0.51 | |
| 31 | 1 | Al alloy | Conductive | - | - | - | - | 110.3 | 246.9 | 178.6 | 0.45 | |
| 32 | 1 | Al alloy | Insulated | - | - | - | - | 147.3 | 286.0 | 216.66 | 0.52 | |
| 33 | 4 | Steel material | Conductive | - | - | - | - | 178.2 | 246.6 | 212.4 | 0.72* | Comparative examples |
| 34 | 4 | Steel material | Insulated | - | - | - | - | 142.1 | 261.6 | 201.9 | 0.54* | |
| 35 | 5 | Steel material | Conductive | - | - | - | - | 169.3 | 273.2 | 221.3 | 0.62* | |
| 36 | 5 | Steel material | Insulated | - | - | - | - | 151.2 | 268.4 | 209.8 | 0.56* | |
| 37 | Al alloy | Steel material | Conductive | - | - | - | - | 189.9 | 237.6 | 213.8 | 0.80* | Conventional examples |
| 38 | Al alloy | Steel material | Insulated | - | - | - | - | 290.2 | 255.0 | 272.6 | 1.14* | |
| 39 | 1 | 2 | Conductive | — | — | — | — | 13.20 | 11.8 | 12.5 | 1.12* | Comparative examples |
| 40 | 1 | Steel material | Insulated | — | — | — | — | 149.10 | 231.5 | 190.3 | 0.64* | |

The symbol "*" indicates that the value is out of scope of the present invention.
<u>Underiline</u> indicates that the value is out of characteristic range which is object of the present invention.

[Table 5B]

| Test No. | Height of sludge (mL/10mL) | Number of accepted points in cross-cut test | | DuPont impact test | | |
|---|---|---|---|---|---|---|
| | | Titanium material | Metal material | 200mm height | 500mm height | |
| 21 | 3.2 | 100/100 | 100/100 | Absence | Absence | Inventive examples |
| 22 | 2.0 | 100/100 | 100/100 | Absence | Absence | |
| 23 | 3.4 | 100/100 | 100/100 | Absence | Absence | |
| 24 | 2.2 | 100/100 | 100/100 | Absence | Absence | |
| 25 | 4.2 | 100/100 | 100/100 | Absence | Absence | |
| 26 | 2.8 | 100/100 | 100/100 | Absence | Absence | |
| 27 | 3.1 | 100/100 | 100/100 | Absence | Absence | |
| 28 | 4.7 | 100/100 | 100/100 | Absence | Absence | |
| 29 | 4.3 | 100/100 | 100/100 | Absence | Absence | |
| 30 | 4.3 | 100/100 | 100/100 | Absence | Absence | |
| 31 | 3.9 | 100/100 | 100/100 | Absence | Absence | |
| 32 | 4.1 | 100/100 | 100/100 | Absence | Absence | |
| 33 | 7.0 | 100/100 | 100/100 | Presence | Presence | Comparative examples |
| 34 | 5.8 | 100/100 | 100/100 | Absence | Presence | |
| 35 | 6.8 | 100/100 | 100/100 | Presence | Presence | |
| 36 | 5.9 | 100/100 | 100/100 | Absence | Presence | |
| 37 | 7.3 | 100/100 | 100/100 | Absence | Absence | Conventional examples |
| 38 | 6.2 | 100/100 | 100/100 | Absence | Absence | |
| 39 | 2.1 | 100/100 | 100/100 | Absence | Presence | Comparative examples |
| 40 | 2.2 | 100/100 | 100/100 | Absence | Presence | |

Test Nos. 1 to 12 and 21 to 32 are examples satisfying the provisions of the present invention, and had the same good coating film adhesion as Comparative Examples 17 and 18 and Comparative Examples 37 and 38 (related art examples in which the Al alloy and the steel material are combined).

The comparative examples of Test Nos. 13 to 16 and Test Nos. 33 to 36 did not satisfy Expression (i) or (ii), and the coating film adhesion evaluated by the DuPont test was not sufficient. It is presumed that this is because Fe was not sufficiently removed from the surface of the titanium material.

The comparative examples of Test Nos. 19 and 39 did not satisfy Expression (i) or (ii), and the coating film adhesion evaluated by the DuPont test was not sufficient. It is presumed that this is because the joined body included no non-titanium material.

The comparative examples of Test Nos. 20 and 40 did not satisfy Expression (i) or (ii), and the coating film adhesion evaluated by the DuPont test was not sufficient. It is presumed that this is because the joined body was not cleaned before the chemical conversion.

Test Nos. 17, 18, 37, and 38 are each examples of an Al composite material in which an Al alloy is used instead of a titanium material. In the examples of the Al composite materials subjected to Zr-based chemical conversion (Test Nos. 17 and 18), the amount of sludge generated was four times or more of that generated in the invention examples (Test Nos. 1 to 12). In the examples of the Al composite materials subjected to zinc phosphate-based chemical conversion (Test Nos. 37 and 38), the amount of sludge generated was about 1.5 to 3.7 times that generated in the invention examples (Test Nos. 21 to 32).

[Brief Description of the Reference Symbols]

1    titanium material

2    metal material

3    joining clipper

**Claims**

1.  A titanium composite material, comprising:

    a joined body including a titanium material and a metal material other than the titanium material; and
    a chemical conversion layer formed on a surface of the joined body,
    wherein the chemical conversion layer contains Zr and/or P, and
    an amount of Zr or P adhered per unit area in the chemical conversion layer satisfies at least one of Expression (i) and Expression (ii),

    $$Z_{Ti}/Z_m < 0.20 \ ... \ (i)$$

    $$P_{Ti}/P_m < 0.54 \ ... \ (ii)$$

    respective symbols in Expressions (i) and (ii) are defined as follows,

    $Z_{Ti}$: an amount of Zr adhered per unit area in the chemical conversion layer formed on a surface of the titanium material,
    $Z_m$: an amount of Zr adhered per unit area in the chemical conversion layer formed on a surface of the metal material,
    $P_{Ti}$: an amount of P adhered per unit area in the chemical conversion layer formed on the surface of the titanium material, and
    $P_m$: an amount of P adhered per unit area in the chemical conversion layer formed on the surface of the metal material.

2.  The titanium composite material according to Claim 1,

    wherein the Fe content of the titanium material is 0.50% or less by mass%, and
    a region where Fe is detected by EPMA analysis on the surface of the titanium material is less than 3.0% by area ratio.

3.  The titanium composite material according to Claim 1 or 2,
    wherein the metal material is one or more selected from steel, industrial pure aluminum, an aluminum alloy, industrial pure magnesium, and a magnesium alloy.

4.  The titanium composite material according to any one of Claims 1 to 3, further comprising a coating film on the chemical conversion layer.

5.  The titanium composite material according to any one of Claims 1 to 4,
    wherein the amount of Zr or P adhered per unit area in the chemical conversion layer satisfies at least one of Expression (i') or Expression (ii').

    $$0.05 \le Z_{Ti}/Z_m < 0.20 \ ... \ (i')$$

$$0.03 \leq P_{Ti}/P_m < 0.54 \ldots (ii')$$

6. The titanium composite material according to any one of Claims 1 to 5, further comprising an insulating material disposed between the titanium material and the metal material.

# FIG. 1

| TITANIUM TYPE | METAL STRUCTURE | Fe LOCAL CONTAMINATION | RATIO OF Fe DETECTED AREA(%) |
|---|---|---|---|
| 1 | | | 0.8 |
| 4 | | | 3.0 |

EP 3 916 117 A1

FIG. 2

# FIG. 3

```
        ┌─────────────────────┐
        │       INGOT         │
        └─────────────────────┘
                  │
                  ▼
        ┌─────────────────────┐
        │    HOT WORKING      │
        └─────────────────────┘
                  │
                  ▼
        ┌─────────────────────┐
        │    SHOT-PEENING     │
        └─────────────────────┘
                  │
                  ▼
        ┌─────────────────────┐
        │   KOLENE TREATMENT  │
        └─────────────────────┘
                  │
                  ▼
        ┌─────────────────────┐         ┌──────────────────────────┐
        │  PICKLING TREATMENT │────────▶│  CLEANING WITH $FeCl_3$  │
        └─────────────────────┘         └──────────────────────────┘
                  │                                  │
                  ▼                                  │
        ┌─────────────────────┐◀────────────────────┘
        │   TITANIUM MATERIAL │
        └─────────────────────┘
                  │                                  │
                  │                                  ▼
                  │                      ┌──────────────────────────┐
                  │                      │        INSULATING        │
                  │                      └──────────────────────────┘
                  ▼                                  │
        ┌─────────────────────┐◀────────────────────┘
        │      JOINING        │
        └─────────────────────┘
                  │
                  ▼
        ┌─────────────────────┐
        │     CLEANING        │
        └─────────────────────┘
                  │
                  ▼
        ┌─────────────────────┐
        │      WORKING        │
        └─────────────────────┘
                  │
                  ▼
        ┌─────────────────────┐         ┌──────────────────────────┐
        │ CHEMICAL CONVERTING │────────▶│ ELECTRODEPOSITION COATING│
        └─────────────────────┘         └──────────────────────────┘
                  │                                  │
                  ▼                                  │
        ┌─────────────────────┐◀────────────────────┘
        │      TITANIUM       │
        │  COMPOSITE MATERIAL │
        └─────────────────────┘
```

## INTERNATIONAL SEARCH REPORT

| International application No. |
| --- |
| PCT/JP2020/002226 |

A. CLASSIFICATION OF SUBJECT MATTER
C22C 14/00(2006.01)i; C23C 22/12(2006.01)i; C23C 22/34(2006.01)i
FI: C23C22/12; C23C22/34; C22C14/00 Z

According to International Patent Classification (IPC) or to both national classification and IPC

B. FIELDS SEARCHED

Minimum documentation searched (classification system followed by classification symbols)
C23C22/12; C22C14/00; C23C22/34

Documentation searched other than minimum documentation to the extent that such documents are included in the fields searched
Published examined utility model applications of Japan          1922–1996
Published unexamined utility model applications of Japan      1971–2020
Registered utility model specifications of Japan                    1996–2020
Published registered utility model applications of Japan        1994–2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 48-48336 A (FUJITSU LTD.) 09.07.1973 (1973-07-09) claims | 1-6 |
| A | JP 2012-237034 A (DAIWA FINE CHEMICALS CO., LTD.) 06.12.2012 (2012-12-06) claims, paragraphs [0072]-[0076] | 1-6 |

☐ Further documents are listed in the continuation of Box C.          ☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 05 March 2020 (05.03.2020) | 17 March 2020 (17.03.2020) |

| Name and mailing address of the ISA/ Japan Patent Office 3-4-3, Kasumigaseki, Chiyoda-ku, Tokyo 100-8915, Japan | Authorized officer Telephone No. |
| --- | --- |

Form PCT/ISA/210 (second sheet) (January 2015)

**INTERNATIONAL SEARCH REPORT**
Information on patent family members

International application No.

PCT/JP2020/002226

| Patent Documents referred in the Report | Publication Date | Patent Family | Publication Date |
|---|---|---|---|
| JP 48-48336 A | 09 Jul. 1973 | (Family: none) | |
| JP 2012-237034 A | 06 Dec. 2012 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019009748 A

**Non-patent literature cited in the description**

- Environmental Protection of Pretreatment for Carbody. **OKADA et al.** Surface Technology. The Surface Finishing Society of Japan, 2004, vol. 55, 719-724

- **HIROYOSHI SOEJIMA.** Electron Beam Microanalysis. NIKKAN KOGYO SHIMBUN, LTD, 111-112